(19) Europäisches Patentamt
European Patent Office
Office européen des brevets

(11) **EP 1 881 914 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **06742935.7**

(22) Anmeldetag: **16.05.2006**

(51) Int Cl.:
*B60R 21/00* (2006.01)    *B60T 7/12* (2006.01)
*B60T 17/18* (2006.01)    *B60R 21/01* (2006.01)
*B60R 21/013* (2006.01)    *B60R 21/0132* (2006.01)

(86) Internationale Anmeldenummer:
**PCT/EP2006/004592**

(87) Internationale Veröffentlichungsnummer:
**WO 2006/122742 (23.11.2006 Gazette 2006/47)**

(54) **VERFAHREN UND VORRICHTUNG ZUR ANSTEUERUNG EINES INSASSENSCHUTZMITTELS**

METHOD AND DEVICE FOR TRIGGERING A PASSENGER PROTECTION MEANS

PROCEDE ET DISPOSITIF DE COMMANDE D'UN MOYEN DE PROTECTION DES OCCUPANTS

(84) Benannte Vertragsstaaten:
**DE ES FR GB IT**

(30) Priorität: **19.05.2005 DE 102005022997**

(43) Veröffentlichungstag der Anmeldung:
**30.01.2008 Patentblatt 2008/05**

(73) Patentinhaber: **Daimler AG**
**70327 Stuttgart (DE)**

(72) Erfinder:
• **BERNZEN, Werner**
**71139 Ehningen (DE)**
• **REUTTER, Dominic**
**73274 Notzingen (DE)**

(74) Vertreter: **JENSEN & SON**
**366-368 Old Street**
**London EC1V 9LT (GB)**

(56) Entgegenhaltungen:
**WO-A-2004/085220    DE-C1- 10 121 386**

## Beschreibung

Die Erfindung betrifft ein Verfahren und eine Vorrichtung zur Ansteuerung eines insbesondere reversiblen Insassenschutzmittels in einem Fahrzeug mit einer Sensorik, welche Fahrzustandsdaten erfasst, und mit einem reversiblen Insassenschutzmittel, welches vor dem Kollisionszeitpunkt ausgelöst und dadurch in Wirkstellung gebracht werden kann. Dabei wird bei Vorliegen eines kritischen Fahrzustands oder einer kritischen Fahrsituation ein Steuersignal zur Auslösung des Insassenschutzmittels aktiviert und bei Wegfall des kritischen Fahrzeugstands deaktiviert.

Unter einer kritischen Fahrsituation oder einen Fahrzustand wird beispielsweise eine Notbremsung oder ein Über- oder Untersteuern des Fahrzeugs, z. B. ein Schleudern des Fahrzeugs, verstanden. In solchen kritischen Situationen werden vorsorgliche Maßnahmen zum Insassenschutz aktiviert und wieder rückgängig gemacht, wenn die Gefahr vorüber ist. Die Informationen zur Identifizierung einer kritischen Situation und zur Einleitung von vorbeugenden Maßnahmen liefern Sensoren, wie z. B. Sensoren eines Brems-Assistenten oder eines Fahrdynamikregelsystems. Diese Systeme können frühzeitig kritische Fahrsituationen wie Schleudern oder Notbremsen des Fahrzeugs erkennen und ein Steuersignal in Art eines Flags oder eines Statusbits beispielsweise zur präventiven Straffung eines reversiblen Gurtstraffers erzeugen oder setzen.

Im Stand der Technik ist dazu aus der DE 101 21 386 C1 ein Verfahren zum Ansteuern eines reversiblen Insassenschutzmittels in einem Kraftfahrzeug mit einer Fahrzustandssensorik, welche Fahrzustandsdaten erfasst, und mit einem reversiblen Insassenschutzmittel, welches vor dem Kollisionszeitpunkt ausgelöst und dadurch in Wirkstellung gebracht werden kann, bekannt. Hierbei werden die Fahrzustandsdaten hinsichtlich eines Zustands "Notbremsung" überwacht, und bei ermitteltem Zustand "Notbremsung" wird das Insassenschutzmittel angesteuert. Von der Datenverarbeitungseinrichtung wird zusätzlich ein Zustand "Übersteuern" und ein Zustand "Untersteuern" ermittelt. Wenn von der Datenverarbeitungseinrichtung der Zustand "Notbremsung" und/oder der Zustand "Übersteuern" und/oder der Zustand "Untersteuern" erkannt wird, wird das reversible Insassenschutzsystem angesteuert. Nach Wegfall des kritischen Fahrzustands wird das angesteuerte Insassenschutzsystem deaktiviert.

In der WO 2004/085220 A1 wird gemäß dem Oberbegriff des Anspruchs 1 ein Verfahren zum Ermitteln mindestens eines, vorzugsweise jedoch mehrerer, vom Fahrer unabhängiger Eingriffe in ein Fahrzeugsystem mit einem Gefahrenrechner beschrieben. Dem Eingang des Gefahrenrechners werden vorgegebene Fahrzeugdaten, Umfelddaten, aktuelle Fahrzeug- und Fahrerdaten, Personendaten innerhalb und außerhalb des Fahrzeugs und dergleichen zugeführt, aufgrund derer der Gefahrenrechner eine Bewertung der Gefahrenlage des Fahrzeugs und der im und außerhalb des Fahrzeugs vorhandenen Personen vornimmt. In Abhängigkeit von der Bewertung der Gefahrenlage und gegebenenfalls weiterer Kriterien oder Gewichtungen gibt der Gefahrenrechner Ansteuersignale aus, welche Aktuatoren steuern, welche das Fahrverhalten des Fahrzeugs oder den Insassenschutz oder Schutzmittel für weitere Verkehrsteilnehmer, wie etwa Fussgänger oder Radfahrer, derart ändern oder auslösen, dass eine maximale Schutzwirkung für die Personen und das Fahrzeug nach einer Prioritätsschaltung erreicht wird. Es wird dabei auch auf eine von der Gefahrenlage abhängige Aktivierung eines reversiblen Gurtstraffers eingegangen.

Mit zunehmenden Sicherheitsanforderungen im Fahrzeug und mit zunehmender Anzahl von ansteuerbaren, reversiblen Insassenschutzmitteln als vorbeugende Maßnahme in einer kritischen Fahrsituation ist eine differenzierte Bewertung des Fahrzustands bzw. des Fahrverhaltens erforderlich.

Auch wenn bei Identifizierung einer kritischen Fahrsituation das Steuersignal zur Ansteuerung des reversiblen Gurtstraffers nur kurz gesetzt wird, bleibt der Gurtstraffer solange gestrafft, bis ein zugehöriges Signal zum Lösen gesetzt wird, wenn die fahrdynamischen und physikalischmechanischen Lösebedingungen zum Lösen des Gurtstraffers erfüllt sind. Ein nur kurz gesetzte Steuersignal zur Ansteuerung des reversiblen Gurtstraffers ist für eine Ansteuerung weiterer Insassenschutzmittel, z. B. zur Ansteuerung eines fahrdynamischen Sitzes, ungeeignet, da dieser eine anhaltende Ansteuerung benötigt, die bis zur Erfüllung einer Rücksetzbedingung anhält.

Der Erfindung liegt daher die Aufgabe zugrunde, ein verbessertes Verfahren und eine Vorrichtung der eingangs genannten Art anzugeben, mittels derer eine sichere und genaue Steuerung der Insassenschutzmittel ermöglicht wird.

Die Aufgabe wird durch ein Verfahren gelöst, welches die in Anspruch 1 angegebenen Merkmale aufweist. Hinsichtlich der Vorrichtung wird die Aufgabe erfindungsgemäß gelöst durch die Merkmale des Anspruchs 13.

Vorteilhafte Ausgestaltungen der Erfindung sind Gegenstand der Unteransprüche.

Das erfindungsgemäße Verfahren sieht vor, dass ein insbesondere reversibles Insassenschutzmittel, welches vor einem Kollisionszeitpunkt mittels eines Steuersignals aktiviert und dadurch in Wirkstellung gebracht werden kann, nur bei Wegfall des betreffenden kritischen Fahrzustands und zusätzlich in Abhängigkeit von mindestens einer weiteren Bedingung, welche mindestens ein erfasstes insbesondere kontrollierbares Fahrverhalten oder einen Fahrzustand repräsentiert, deaktiviert wird.

Der Vorteil dieses Verfahrens liegt darin, dass das Steuersignal für mehrere ansteuerbare Insassenschutzsysteme als auslösendes Signal geeignet ist, das im wesentlichen alle möglichen kritischen Fahrsituationen, beispielsweise für Schleudern, Überschlagen oder Notbremsen des Fahrzeugs berücksichtigt und eine differenzierte Ansteuerung einer Vielzahl von verschiedenen Insassenschutzmitteln, beispielsweise eines Gurtstraffers und/oder eines fahrdynamischen Sitzes ermöglicht. Dabei wird das auslösende Steuersignal solange gesetzt bis ein kontrollierbares Fahrverhalten und insbesondere keine vorbeugende Maßnahme durch eine aktive Regelung oder Steuerung eines Fahrzeugsystems aktiviert ist. Somit ist ein verbesserter Insassenschutz gegeben. Darüber hinaus nimmt der Fahrer die differenzierte und verschiedene Fahrsituationen berücksichtigende und somit verbesserte Ansteuerung der verschiedenen Insassenschutzmittel plausibel wahr.

In einer bevorzugten Ausführungsform wird für ein zu erfassendes weiteres Fahrverhalten ein Fahrdynamik-Regelsystem zeit- und/oder zustandsabhängig überwacht. Insbesondere wird das Fahrdynamik-Regelsystem auf eine Nichtaktivierung überwacht. Dabei wird geprüft, ob das Fahrdynamik-Regelsystem für eine vorgegebene Zeitdauer von mindestens 1 s deaktiviert ist. Mit anderen Worten: Es wird geprüft, ob kein Eingriff des Fahrdynamik-Regelsystems für eine Zeitdauer beispielsweise von mindestens 1 s erfolgt. Ist dies der Fall, so wird eine unkritische Fahrsituation oder ein unkritisches und somit kontrollierbares Fahrverhalten erkannt, so dass das Steuersignal zur vorbeugenden Auslösung eines oder mehrerer Insassenschutzsysteme rückgesetzt (deaktiviert) werden kann.

Zweckmäßigerweise werden zur Erkennung einer kritischen Fahrsituation oder eines kritischen Fahrverhaltens verschiedene Fahrdynamik-Regelsysteme, z. B. ein Bremsregelsystem, insbesondere ein Antiblockiersystem (kurz ABS genannt), eine elektronische Bremskraftverteilung (kurz EBV genannt), ein elektronisches Stabilisierungsprogramm (kurz ESP genannt), eine Antriebsschlupfregelung (kurz ASR genannt) auf eine Deaktivierung und/oder Aktivierung überwacht. Zusätzlich wird zur Rücksetzung des Steuersignals geprüft, ob kein Eingriff in einer dieser Systeme für mindestens 1 s erfolgte. So ist eine hinreichend gute Erkennung eines wieder vorliegenden kontrollierbaren Fahrverhaltens oder Fahrzustands und daraus abgeleitet des Gefährdungsempfindens eines Fahrzeugnutzers möglich.

Zweckmäßigerweise wird als weitere Bedingung die Giergeschwindigkeit auf eine Unterschreitung eines vorgegebenen ersten Schwellwertes überwacht. Liegt ein Unterschreiten des vorgegebenen Schwellwertes für eine Zeitdauer von mindestens 1 s vor, so wird ein unkritischer Fahrzustand oder ein unkritisches Fahrverhalten erkannt und das Steuersignal wird deaktiviert. Der erste Schwellwert kann von der Fahrzeuggeschwindigkeit abhängig gewählt sein und z.B. mit hohen Geschwindigkeiten abnehmen. Damit würde die Rücksetzung bei hohen Geschwindigkeiten erleichtert, weil erfahrungsgemäß bei höheren Geschwindigkeiten mit größerer Aufmerksamkeit gefahren wird.

Zusätzlich oder alternativ kann in einem weiteren Fall als weitere Bedingung geprüft werden, ob die Räder des Fahrzeugs stehen und ein vorgegebener zweiter Schwellwert der Giergeschwindigkeit unterschritten bleibt. Für das Schleudern oder Drehen des Fahrzeugs bei stehenden Rädern wird somit als eine Bewertungsgröße ebenfalls die Giergeschwindigkeit überwacht. Die Wahl unterschiedlicher Schwellwerte ermöglicht jedoch eine eigene Anpassung an die besondere Situation, dass das Fahrzeug bei stehenden Rädern um die Hochachse rotiert, was auf glatter Fahrbahn vorkommen kann.

Vorzugsweise wird die Unterschreitung des Schwellwerts für eine vorgegebene Zeitdauer, insbesondere für eine Zeitdauer von mindestens 1 s überwacht. Wird der vorgegebene Schwellwert mindestens 1 s unterschritten, so wird eine unkritische Fahrsituation identifiziert und das Steuersignal wird rückgesetzt. Wird hingegen der Schwellwert der Giergeschwindigkeit überschritten, so wird eine Drehung oder ein Schleudern des Fahrzeugs identifiziert.

Als eine weitere Bedingung kann zum Rücksetzen des Steuersignals geprüft werden, ob keine durch einen Fahrer ausgelöste Teilbremsung und keine autonome Teilbremsung beispielsweise eines Bremsassistenzsystems vorliegt. Unter einer autonomen Teilbremsung wird insbesondere eine auf einer Umgebungserfassung automatisiert ausgelöste Notbremsung verstanden. Bei einer durch einen Fahrer ausgelösten Teil- oder Notbremsung wird aufgrund des Verhaltens des Fahrers auf eine Gefahren-oder Notsituation geschlossen. Hierzu wird mindestens ein Parameter wie der Bremsdruck, die Geschwindigkeit der Bremspedalbetätigung und die Geschwindigkeit der Rücknahme des Gaspedals zur Bewertung des Bremsvorgangs herangezogen. Liegt keine durch einen Fahrer ausgelöste Teilbremsung und keine autonome Teilbremsung für die Zeitdauer von mindestens 1 s vor, so wird ein unkritischer Fahrzustand identifiziert und das Steuersignal wird deaktiviert oder rückgesetzt.

Mittels der erfassten Fahrzustandsdaten eines der Fahrdynamik-Regelsysteme und/oder einer Sensorik und deren Überwachung auf ein Unterschreiten und/oder ein Überschreiten von Schwellwerten kann als kritischer Fahrzustand ein Übersteuern ein Untersteuern und/oder eine Notbremsung des Fahrzeugs identifiziert werden. Beispielsweise werden hierzu Veränderungen des Lenkwinkels, der Geschwindigkeit des Fahrzeugs, der Raddrehzahl, der Giergeschwindigkeit, der Querbeschleunigung, der Längsbeschleunigung, einer resultierenden Gesamtbeschleunigung, eines tatsächlichen Reibwertes erfasst und auf Über-und/oder Unterschreiten von Schwellwerten insbesondere für eine vorgegebene Zeitdauer überwacht.

Liegt nun eine kritische Fahrsituation vor, so können mittels des aktivierten Steuersignals als vorbeugende Maßnahme zum Schutz der Insassen mindestens ein reversibles Insassenschutzsystem aktiviert werden. Ein reversibles Insassenschutzmittel ist ein Mittel, dessen Zweck es ist, die Belastung eines Fahrzeuginsassen im Falle einer Kollision zu vermindern. Hierbei kann das Schutzmittel mehrmals vom Ausgangszustand in einen Wirkzustand gebracht, und aus dem Wirkzustand wieder in den Ausgangszustand zurückversetzt werden. Als reversibles Insassenschutzmittel werden beispielsweise eine elektrische Sitzverstellvorrichtung, ein reversibler Gurtstraffer, eine elektrische Verstellvorrichtung von Fahrzeugöffnungen und/oder eine elektrisch verstellbare Prallschutzvorrichtung aktiviert.

Die erfindungsgemäße Vorrichtung weist eine Steuereinheit mittels derer bei Vorliegen mindestens eines kritischen Fahrzustands ein Steuersignal zur Auslösung mindestens eines Insassenschutzmittels aktivierbar und bei Wegfall des betreffenden kritischen Fahrzustands und in Abhängigkeit von mindestens einer weiteren Bedingung, welche mindestens ein erfasstes Fahrverhalten repräsentiert, deaktivierbar ist. Die Steuereinheit überprüft fortlaufend, ob einer der kritischen Fahrzustände Übersteuern, Untersteuern oder Notbremsung vorliegt. Ist dies der Fall, so werden ein oder mehrere reversiblen Insassenschutzsysteme angesteuert. Insbesondere wird die Ansteuerung der Insassenschutzmittel bei gleichzeitigem Vorliegen von mehr als einem der kritischen Zustände Notbremsung, Untersteuern und Übersteuern auf eine kombinierte Gefährdung angepasst. Zur Deaktivierung der Insassenschutzmittel durch Rücksetzung des ausgelösten und gesetzten Steuersignals wird zusätzlich zum Wegfall der identifizierten kritischen Fahrsituation mindestens eine weitere Bedingung, welche indikativ für ein kontrollierbares Fahrverhalten des Fahrzeugs ist, herangezogen.

In einer besonderen Ausgestaltung gibt die Steuereinheit ein mit dem identifizierten Zustand korrespondierendes Steuersignal ab. Auf diese Weise steht das Steuersignal und die damit verbundene Information über den Zustand "Übersteuern", "Untersteuern" oder "Notbremsung" auch anderen Fahrzeugeinrichtungen beispielsweise zur Steuerung und/oder Regelung anderer Betriebsfunktionen des Fahrzeugs zur Verfügung.

Vorzugsweise weist die Vorrichtung einen Datenbus auf, wobei die Steuereinheit das Steuersignal auf den Datenbus überträgt. Das Steuersignal und die Information über den Zustand "Übersteuern", "Untersteuern" oder "Notbremsung" sind so über eine einheitliche Schnittstelle abrufbar.

Die Erfindung wird im Folgenden anhand eines Ausführungsbeispiels näher erläutert.

Dabei zeigen:

Fig. 1    ein Blockschaltbild einer erfindungsgemäßen Vorrichtung und

Fig. 2    ein Ablaufdiagramm eines erfindungsgemäßen Verfahrens.

Einander entsprechende Teile sind in allen Figuren mit den gleichen Bezugszeichen versehen.

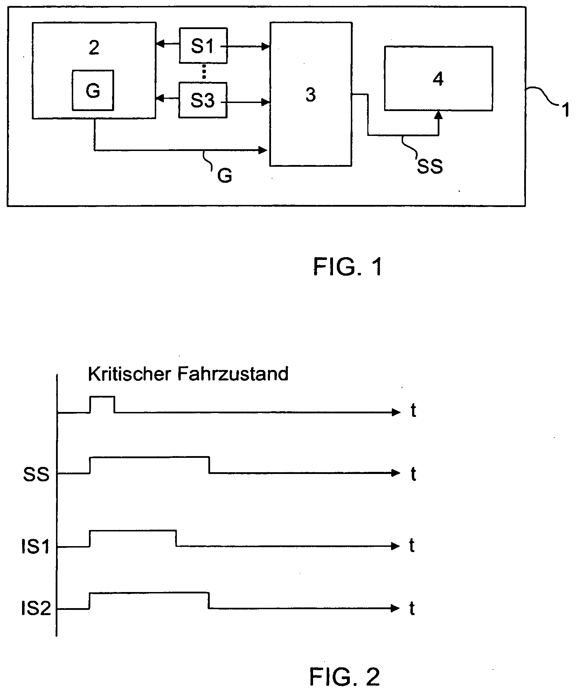

Figur 1 zeigt schematisch in einem Blockschaltbild ein Fahrzeug 1, das mit einem Fahrdynamik-Regelsystem 2 ausgerüstet ist. Beispielsweise umfasst das Fahrzeug 1 als Fahrdynamikregelsystem 2 ein oder mehrere der folgenden Systeme, z. B. ein Antiblockiersystem, eine Antriebsschlupfregelung, ein elektronisches Stabilitätsprogramm, eine elektronische Bremskraftverteilung und/oder ein Bremsregelsystem.

Das Fahrzeug 1 weist zudem mindestens ein mit einer Steuereinheit 3 verbundenes, reversibles Insassenschutzmittel 4 auf. Als Insassenschutzmittel 4 dienen beispielsweise ein Gurtstraffer, eine elektrische Sitzverstellvorrichtung, eine elektrische Verstellvorrichtung von Fahrzeugöffnungen und/oder eine elektrisch verstellbare Prallschutzvorrichtung. Das oder die Insassenschutzmittel 4 sind reversibel, d.h. sie können mehrmals von einem Ausgangszustand in einen Wirkzustand gebracht und wieder zurückversetzt werden.

Die Steuereinheit 3 ist mit dem Fahrdynamikregelsystem 2 und/oder dem Insassenschutzmittel 4 beispielsweise über einen Datenbus und/oder eine Steuerleitung verbunden.

Das Fahrdynamikregelsystem 2 ermittelt mittels einer Anzahl von Sensoren S1 bis S3 Fahrzugszustandsdaten, z. B. eine Ist-Giergeschwindigkeit, die Soll-Giergeschwindigkeit, eine Querbeschleunigung, eine Längsbeschleunigung, die Geschwindigkeit, die Raddrehzahl des Fahrzeugs 1. Als Sensorik oder Sensoren S1 bis S3 sind beispielsweise ein Beschleunigungssensor, ein Lenkwinkelsensor, ein Giergeschwindigkeitssensor, ein Querbeschleunigungssensor und/oder ein Drehzahlsensor vorgesehen, die gegebenenfalls zur Ermittlung weiterer Fahrzustandsdaten kombiniert ausgewertet werden.

Aus der Abweichung zwischen Soll- und Istwerten der erfassten Fahrzustandsdaten bzw. aus der Überschreitung und/oder Unterschreitung von vorgegebenen Schwellwerten wird eine kritische Fahrsituation oder ein kritischer Fahrzustand beispielsweise ein Übersteuern oder ein Untersteuern des Fahrzeugs oder eine Notbremsung ermittelt. Beispielsweise wird mittels des Fahrdynamikregelsystems 2 ein Übersteuern des Fahrzeugs 1 identifiziert, wenn das Heck ausbricht und ein gefährlicher Fahrzustand eintreten könnte.

Wird eine derartige kritische Fahrsituation erkannt, so erfolgt die Ansteuerung des oder der Insassenschutzmittel 4 mittels der Steuereinheit 3, beispielsweise für den Fall des Übersteuerns oder Übersteuerns, unter Auswertung der Stellgröße G des Fahrdynamikregelsystems 2. Ein hoher Wert der Stellgröße G ist z.B. ein Indikator für ein starkes Übersteuern beziehungsweise ein drohendes starkes Übersteuern des Fahrzeugs und führt zum Setzen des Steuersignals SS.

In Figur 2 ist dazu ein exemplarisches Zeitdiagramm für das Setzen und Rücksetzen des Steuersignals SS mittels der Steuereinheit 3 dargestellt.

Das erste Signal "kritischer Fahrzustand" zeigt einen vergleichsweise kurzen Puls, welcher entsteht, wenn z. B. das Bremspedal mit hoher Betätigungsgeschwindigkeit durchgetreten wird, was auf eine kritische Längsdynamik hinweist. Eine kritische Querdynamik würde z.B. bei starkem Untersteuern angezeigt, wenn der Fahrer bei enger Kurvenfahrt, d.h. hoher Querbeschleunigung das Lenkrad noch weiter einschlägt, so dass das Fahrzeug über die Vorderräder schiebt. Der Fahrer würde das Fahrverhalten schnell korrigieren, so dass der den kritischen Zustand anzeigende Impuls nur von kurzer Dauer wäre, wie in Fig. 2 gezeigt. Da dieser Impuls sehr kurz, z.B. nur für einen Zyklus gesetzt sein kann, reicht dieser möglicherweise zwar für die Auslösung eines reversiblen Gurtstraffers aber nicht für eine Ansteuerung verschiedener anderer Insassenschutzmittel 4, z. B. einen fahrdynamischen Sitz aus. Auch bedeutet die Rücksetzung dieses Impulses nicht notwendig, dass auch die Gefahrensituation vorüber ist.

Gemäß der Erfindung wird das Steuersignal (SS) zur Auslösung der Insassenschutzmittel durch den kurzen Impuls für den kritischen Zustand ausgelöst, die Rücksetzung des Steuersignals SS (auch Flag zur Bewertung der Fahrsituation genannt) erfolgt jedoch nach Wegfall des auslösenden Fahrzustands und in Abhängigkeit von mindestens einer weiteren Bedingung, die indikativ für ein kontrollierbares Fahrverhalten ist. Damit wird sichergestellt, dass Insassenschutzmittel solange in Wirkstellung gebracht werden können, bis sicher feststeht, dass der Fahrzustand des Fahrzeugs wieder der Kontrolle des Fahrers unterliegt. Daher wird das Steuersignal SS oder das einmal gesetzte Flag, z. B. für den Fahrzustand "Untersteuern" oder "Übersteuern" des Fahrzeugs, solange gesetzt, bis die Fahrsituation für den Fahrer plausibel als nicht mehr kritisch eingestuft wird.

Dabei wird das Steuersignal SS rückgesetzt, wenn:

- die kritische Fahrsituation, die zu der Auslösung geführt hat, nicht mehr erfüllt ist (1. Signalverlauf in Fig. 2), und
- mindestens eine weitere Bedingung, die indikativ für ein kontrollierbares Fahrverhalten ist, vorliegt, beispielsweise wenn in Fig. 2 ein oder beide Informationssignale IS1 bzw. IS2 nicht mehr aktiviert sind.

Die Informationssignale IS1 und IS2 zeigen Bedingungen für das Verlängern des Steuersignals SS an, die logisch z.B. so verknüpft sein können, dass nur wenn beide Bedingungen nicht mehr erfüllt sind, das Steuersignal SS zurückgesetzt wird. Nachfolgend werden einige Ausführungsbeispiele für die Erfassung solcher Bedingungen und die Ermittlung eines wieder eingetretenen kontrollierbaren Fahrverhaltens beschrieben.

Das Informationssignals IS1 könnte z.B. anzeigen, ob seit Deaktivierung eines Fahrdynamik-Regelsystems eine bestimmte Wartezeit von z.B. 1 s noch nicht abgelaufen ist. Die Fahrsituation wird also nur dann als unkritisch eingestuft, wenn für mindestens eine Sekunde keine ABS- und keine ESP-Regelung mehr statt gefunden hat. Für das Vorliegen einer unkritischen Fahrsituation muss also geprüft werden, ob für mindestens eine Zeitdauer von 1 s kein Eingriff eines Fahrdynamik-Regelsystems 2, z. B. keine ABS-Regelung und keine ESP-Regelung, erfolgte.

Das Informationssignal IS2 könnte z.B. anzeigen, ob das Fahrzeug noch mit hoher Querbeschleunigung fährt. Bei einem fahrenden Fahrzeug mit drehenden Rädern wird daher geprüft, ob der Betrag der erfassten Giergeschwindigkeit für mindestens 1 s unter einem vorgegebenen Schwellwert liegt.

Ausgehend von der Gleichung für eine stationäre Kreisfahrt gemäß:

$$a_y = v_{Fahrzeug} * v_{Gi} \qquad\qquad [1]$$

wird die Unterschreitung des vorgegebenen Schwellwerts überwacht gemäß:

$$ABS(v_{Gi}) < MIN(v_{Gi\_max}, a_{y\_max}/v_{Fahrzeug}) \text{ für mindestens 1 s} \qquad [2]$$

mit $a_y$ = Querbeschleunigung,
$v_{Fahrzeug}$ = Fahrzeuggeschwindigkeit,
$v_{Gi}$ = Giergeschwindigkeit,
$ABS(v_{Gi})$ = Absolutbetrag der gemessenen Giergeschwindigkeit,
$MIN(u,v)$ = Minimum aus den Argumenten u und v.

Der Schwellwert ergibt sich somit aus dem Minimum einer Konstante $v_{Gi\_max}$ = z. B. 60 ° /s und eines geschwindigkeitsabhängigen Terms mit der Konstante $a_{y\_max}$ = z. B. 6 m/s$^2$. Der Schwellwert nimmt somit mit zunehmender Fahrzeuggeschwindigkeit ab.

Für den Fall, dass die Räder des Fahrzeugs stehen, was anhand einer Auswertung von Raddrehzahlen feststellbar ist, kann sich das Fahrzeug trotzdem in einer kritischen Fahrsituation befinden, wenn es sich um die Hochachse dreht. Daher wird in einem parallelen Entscheidungspfad für den Fall stehender Räder und für den Wegfall der unkritischen Fahrsituation geprüft, ob die Giergeschwindigkeit einen vorgegebenen Schwellwert unterschreitet gemäß:

$$\text{ABS}(v_{Gi}) < v_{Gi\_min} \qquad [3]$$

mit ABS($v_{Gi}$) = Absolutbetrag der gemessenen Giergeschwindigkeit,
$v_{Gi\_min}$ = vorgegebener Minimalwert für die Giergeschwindigkeit, z. B. 10°/s. Mit dieser vergleichsweise niedrigen Schwelle werden die Anforderungen an die Rücksetzung der präventiv ausgelösten Schutzmittel sehr hoch angesetzt, wenn der Fall eintritt, dass das Fahrzeug z.B. auf glatter Fahrbahn um die Hochachse rotiert und die Räder sich nicht drehen, wenn z.B. das ABS und das ESP nicht mehr regeln können. Hier schleudert das Fahrzeug bei stehenden Rädern und die Giergeschwindigkeit ist die einzig vorhandene Bewertungsgröße.

Für den Fall, dass als kritische Fahrsituation eine Notbremsung, ausgelöst durch einen Fahrer und/oder durch ein autonomes Bremssystem, bei dem die Bremsung durch ein vorausschauendes Umfelderfassungssystem bewirkt wird, vorliegt, wird als eine separate Bedingung für den Wegfall der kritischen Fahrsituation und für das Rücksetzen des Steuersignals SS geprüft, ob sowohl die Notbremsung des Fahrers als auch die Notbremsung des autonomen Bremssystems für mindestens 1 s nicht mehr aktiv sind. Durch die genannten verschiedenen zeit- und zustandsabhängigen Bedingungen, welche einzeln oder in Kombination für das Rücksetzen des Steuersignals SS verwendet werden, wird auch sichergestellt, dass im Falle eines autonomen Bremseingriffs das Steuersignal SS bei kurzzeitigem Objektverlust nicht sofort abgebrochen wird, wenn mindestens ein weiteres fahrdynamisches Kriterium, repräsentiert durch die zugehörigen Informationssignale IS1, IS2 bis ISn für das weitere Vorliegen einer kritischen Situation noch erfüllt ist. PRE-SAFE-Aktionen, d.h. vorbeugende Schutzmaßnahmen werden daher bei kurzzeitigem Objektverlust nicht sofort abgebrochen, wenn die fahrdynamischen Kriterien noch nicht erfüllt werden.

Erfolgt im Anschluss an eine Notbremsung ein Ausweichmanöver oder Ähnliches und stellt sich erst nach diesem Manöver ein kontrollierbares Fahrverhalten ein, so wird auch erst nach Ablauf der vorgegebenen Zeitdauer, z. B. nach Ablauf von mindestens 1 s, das Steuersignal SS rückgesetzt. Die fahrdynamischen Rücksetzbedingungen greifen also auch erst nach Ablauf der o.a. Zeit-Bedingung, obwohl der kritische Fahrzustand ursprünglich nicht durch eine fahrdynamische Kritikalität sondern durch eine Notbremsung ausgelöst wurde.

Eine äquivalente Ausgestaltung im Sinne der Erfindung besteht darin, dass die Rücksetzung des Insassenschutzmittels nicht durch Deaktivierung des gleichen Signals, welches zuvor die Auslösung bewirkt hat, sondern durch ein eigenes Rücksetzsignal bewirkt wird, welches den gleichen Rücksetzbedingungen unterliegt, wie Sie voran stehend dargestellt wurden.

Selbstverständlich kann von dem mit der Wartezeit von 1 s angegebene Wert auch abgewichen werden, ohne von der Lehre der vorliegenden Erfindung wesentlich abzuweichen.

Bezugszeichenliste

1   Fahrzeug
2   Fahrdynamikregelsystem
3   Steuereinheit
4   Insassenschutzmittel

G   Stellgröße
IS  Informationssignal
SS  Steuersignal

**Patentansprüche**

1. Verfahren zur Ansteuerung eines Insassenschutzmittels (4) in einem Fahrzeug (1) mit einer Sensorik, welche Fahrzustandsdaten erfasst, und mit einem reversiblen Insassenschutzmittel (4), welches vor dem Kollisionszeitpunkt ausgelöst und dadurch in Wirkstellung gebracht werden kann, wobei

- bei Vorliegen mindestens eines kritischen Fahrzustands ein Steuersignal (SS) zur Auslösung des Insassenschutzmittels (4) aktiviert und
- bei Wegfall des betreffenden kritischen Fahrzustands das Steuersignal (SS) deaktiviert und damit die Rücksetzung des Insassenschutzmittels (4) in den Ausgangszustand eingeleitet wird, wobei das Steuersignal (SS) in Abhängigkeit von mindestens einer weiteren Bedingung, welche mindestens ein erfasstes kontrollierbares Fahrverhalten repräsentiert, deaktiviert wird,

**dadurch gekennzeichnet, dass**
zur Erfassung des kontrollierbaren Fahrverhaltens die Giergeschwindigkeit ($v_{Gi}$) in ihrem Absolutbetrag auf Unterschreitung eines ersten vorgegebenen Schwellwertes überwacht wird.

2. Verfahren nach Anspruch 1,
**dadurch gekennzeichnet, dass**
zur Erfassung des kontrollierbaren Fahrverhaltens ein Fahrdynamik-Regelsystem (2) zeit- und/oder zustandsabhängig, insbesondere auf eine Nichtaktivierung überwacht wird.

3. Verfahren nach Anspruch 2,
**dadurch gekennzeichnet, dass**
geprüft wird, ob das Fahrdynamik-Regelsystem (2) für eine vorgegebene Zeitdauer, insbesondere von mindestens 1 s deaktiviert ist.

4. Verfahren nach Anspruch 2,
**dadurch gekennzeichnet, dass**
als Fahrdynamik-Regelsystem (2) ein Bremsregelsystem, insbesondere ein Antiblockiersystem, eine elektronische Bremskraftverteilung, ein elektronisches Stabilisierungsprogramm und/oder eine Antriebsschlupfregelung auf eine Aktivierung und/oder eine Deaktivierung überwacht wird.

5. Verfahren nach einem der vorhergehenden Ansprüche,
**dadurch gekennzeichnet, dass**
zur Erfassung des kontrollierbaren Fahrverhaltens das Fahrzeug auf stehende Räder überwacht wird und bei Vorliegen von stehenden Rädern die Giergeschwindigkeit ($v_{Gi}$) in ihrem Absolutbetrag auf Unterschreiten eines zweiten vorgegebenen Schwellwerts überwacht wird.

6. Verfahren nach einem der vorhergehenden Ansprüche,
**dadurch gekennzeichnet, dass**
geprüft wird, ob der vorgegebene Schwellwert für eine vorgegebene Zeitdauer, insbesondere von größer 1 s unterschritten bleibt.

7. Verfahren nach einem der vorhergehenden Ansprüche,
**dadurch gekennzeichnet, dass**
zur Erfassung des kontrollierbaren Fahrverhaltens eine durch einen Fahrer ausgelöste Teilbremsung und/oder eine autonome Teilbremsung zeit- und/oder zustandsabhängig überwacht werden.

8. Verfahren nach Anspruch 7,
**dadurch gekennzeichnet, dass**
geprüft wird, ob die durch einen Fahrer ausgelöste Teilbremsung und/oder die autonome Teilbremsung für eine vorgegebene Zeitdauer, insbesondere von mindestens 1 s deaktiviert sind.

9. Verfahren nach Anspruch 1,
**dadurch gekennzeichnet, dass**
als kritischer Fahrzustand ein Übersteuern, ein Untersteuern eines Zustands und/oder eine Notbremsung anhand von Fahrzustandsdaten, insbesondere anhand von Veränderungen des Lenkwinkels, der Geschwindigkeit des Fahrzeugs, der Raddrehzahl, der Giergeschwindigkeit, der Querbeschleunigung, der Längsbeschleunigung, einer resultierenden Gesamtbeschleunigung, eines tatsächlichen Reibwerts, identifiziert werden bzw. wird.

10. Verfahren nach Anspruch 1,
**dadurch gekennzeichnet, dass**
Insassenschutzsystem (4) eine elektrische Sitzverstellvorrichtung, ein reversibler Gurtstraffer, eine elektrische Verstellvorrichtung von Fahrzeugöffnungen und/oder eine elektrisch verstellbare Prallschutzvorrichtung ist.

11. Vorrichtung zur Durchführung eines Verfahrens nach einem der vorhergehenden Ansprüche, wobei ein Insassenschutzmittel (4) und eine Steuereinheit (3), mittels derer bei Vorliegen mindestens eines kritischen Fahrzustands ein Steuersignal (SS) zur Auslösung des Insassenschutzmittels (4) aktivierbar und bei Wegfall des betreffenden kritischen Fahrzustands und in Abhängigkeit von mindestens einer weiteren Bedingung, welche mindestens ein erfasstes kontrollierbares Fahrverhalten repräsentiert, das Steuersignal (SS) deaktivierbar ist und damit die Rücksetzung des Insassenschutzmittels in den Ausgangszustand eingeleitet werden kann, zur **gekennzeichnet dadurch daß** Erfassung des kontrollierbaren Fahrverhaltens die Giergeschwindigkeit ($v_{Gi}$) in ihrem Absolutbetrag auf Unterschreitung eines ersten vorgegebenen Schwellwertes überwachbar ist.

**Claims**

1. Method for triggering a passenger protection means (4) in a vehicle (1) which comprises a sensor system which detects driving condition data and a reversible passenger protection means (4) which is triggered before the time of collision and can thereby be brought into an active position, wherein

   - in the presence of at least one critical driving condition, a control signal (SS) is activated to trigger the passenger protection means (4), and
   - in the absence of the critical driving condition in question, the control signal (SS) is deactivated and the resetting of the passenger protection means (4) is initiated, the control signal (SS) being deactivated as a function of at least one further condition which represents at least one detected controllable driving behaviour,

   **characterised in that**
   for the detection of the controllable driving behaviour, the yaw velocity ($V_{Gi}$) is monitored in its absolute value for falling below a first preset threshold value.

2. Method according to claim 1,
   **characterised in that**
   for the detection of the controllable driving behaviour, a dynamic drive control system (2) is monitored in a time- and/or state-dependent manner, in particular for non-activation.

3. Method according to claim 2,
   **characterised in that**
   it is checked whether the dynamic drive control system (2) is deactivated for a preset period of time, in particular of at least 1 s.

4. Method according to claim 2,
   **characterised in that**
   as a dynamic drive control system (2), a brake control system, in particular an anti-lock braking system, an electronic braking force distribution unit, an electronic stabilising programme and/or a traction control system is monitored for activation and/or deactivation.

5. Method according to any of the preceding claims,
   **characterised in that**
   for the detection of the controllable driving behaviour, the vehicle is monitored for standing wheels and, in the presence of standing wheels, the yaw velocity ($V_{Gi}$) is monitored in its absolute value for falling below a second preset threshold value.

6. Method according to any of the preceding claims,
   **characterised in that**
   it is checked whether the preset threshold value is undershot for a preset period of time, in particular for more than 1 s.

7. Method according to any of the preceding claims,
   **characterised in that**
   for the detection of the controllable driving behaviour, a partial braking action triggered by a driver and/or an autonomous partial braking action is/are monitored in a time- and/or state-dependent manner.

8. Method according to claim 7,
   **characterised in that**
   it is checked whether the partial braking action triggered by a driver and/or the autonomous partial braking action is/are deactivated for a preset period of time, in particular for at least 1 s.

9. Method according to claim 1,
   **characterised in that**
   as a critical driving condition, an oversteer, an understeer of a condition and/or an emergency braking action is/are identified, in particular on the basis of changes of the steering angle, the speed of the vehicle, the wheel speed, the yaw velocity, the transverse acceleration, the longitudinal acceleration, a resulting total acceleration and an actual friction value.

10. Method according to claim 1,
    **characterised in that**
    the passenger protection means (4) is an electric seat adjusting device, a reversible seat belt tensioner, an electric adjusting device for vehicle openings and/or an electrically adjustable impact protection device.

11. Device for carrying out a method according to any of the preceding claims, wherein a passenger protection means (4) and a control unit (3) are provided, by means of which, in the presence of at least one critical driving condition, a control signal (SS) can be activated to trigger the passenger protection means (4), and, in the absence of the critical driving condition in question and as a function of at least one further condition which represents at least one detected controllable driving behaviour, the control signal (SS) can be deactivated and the resetting of the passenger protection means (4) to the initial state can be initiated,
    **characterised in that**
    for the detection of the controllable driving behaviour, the yaw velocity ($V_{Gi}$) can be monitored in its absolute value for falling below a first preset threshold value.

**Revendications**

1. Procédé de commande d'un moyen (4) de protection de passagers dans un véhicule automobile (1) comprenant un organe sensoriel qui détecte les données d'état de conduite et comprenant un moyen (4) de protection de passagers réversible qui se déclenche avant le moment de la collision et peut ainsi être amené en position d'action,

   - en présence d'au moins un état de conduite critique, un signal de commande (SS) étant activé pour déclencher le moyen (4) de protection de passagers et
   - en cas de suppression de l'état de conduite critique en question le signal de commande (SS) étant désactivé et le moyen (4) de protection des passagers étant replacé dans l'état initial, le signal de commande (SS) étant désactivé en fonction d'au moins une autre condition qui représente au moins un comportement de conduite détecté pouvant être contrôlé, **caractérisé en ce qu'**afin de détecter le comportement de conduite pouvant être contrôlé, on surveille que la valeur absolue de la vitesse de lacet (vGi) demeure en deçà d'une première valeur seuil défini.

2. Procédé selon la revendication 1, **caractérisé en ce qu'**afin de détecter le comportement de conduite pouvant être contrôlé un système de régulation (2) de dynamique de véhicule permet de surveiller notamment une non-activation en fonction de l'état et/ou du temps.

3. Procédé selon la revendication 2, **caractérisé en ce qu'**il est vérifié si le système de régulation (2) de dynamique de véhicule est désactivé pour une durée prédéfinie, notamment pendant au moins 1 seconde.

4. Procédé selon la revendication 2, **caractérisé en ce qu'**en tant que système de régulation (2) de dynamique de véhicule on surveille une activation ou une désactivation d'un système de réglage de frein, notamment un système antiblocage des roues, une répartition de force de freinage électronique, un programme de stabilisation électronique et/ou un système d'antipatinage à l'accélération.

5. Procédé selon l'une quelconque des revendications précédentes, **caractérisé en ce que** pour détecter le comportement de conduite pouvant être contrôlé on surveille les roues directrices du véhicule et en présence de roues directrices, on surveille que la valeur absolue de la vitesse de lacet (vGi) demeure en deçà d'une seconde valeur seuil prédéfinie.

6. Procédé selon l'une quelconque des revendications précédentes, **caractérisé en ce qu'**on vérifie si la valeur seuil prédéfinie pour une durée prédéfinie, en particulier supérieure à 1 seconde, demeure en deçà.

7. Procédé selon l'une quelconque des revendications précédentes, **caractérisé en ce qu'**afin de détecter le comportement de conduite pouvant être contrôlé on surveille un freinage partiel déclenché par un conducteur et/ou un freinage partiel autonome en fonction du temps et/ou de l'état.

8. Procédé selon la revendication 7, **caractérisé en ce qu'**il est vérifié si le freinage partiel déclenché par un conducteur et/ou le freinage partiel autonome sont désactivés pendant une durée prédéfinie, notamment pendant au moins 1 seconde.

9. Procédé selon la revendication 1, **caractérisé en ce qu'**en tant qu'état de conduite critique il est possible d'identifier un survirage, un sous-virage d'un état et/ou un freinage d'urgence à l'aide des données d'état de conduite, en particulier à l'aide de modifications de l'angle de braquage, de la vitesse du véhicule automobile, de la vitesse de roue, de la vitesse de lacet, de l'accélération transversale, de l'accélération longitudinale, d'une accélération totale obtenue, d'un coefficient de frottement réel.

10. Procédé selon la revendication 1, **caractérisé en ce que** le système (1) de protection de passagers est un dispositif de réglage de siège, un dispositif de pré-tension, un dispositif de réglage électrique des ouvertures du véhicule automobile et/ou un dispositif de protection contre les chocs réglable électriquement.

11. Dispositif permettant de mettre en oeuvre un procédé selon l'une quelconque des revendications précédentes, un moyen (4) de protection de passagers et une unité (3) de commande, permettant en présence d'au moins un état de conduite critique d'activer un signal de commande (SS) destiné à déclencher le moyen (4) de protection de passagers et en cas de suppression de l'état de conduite critique en question et en fonction d'au moins une autre condition qui représente au moins un comportement de conduite détecté pouvant être contrôlé, de désactiver le signal de commande (SS) et ainsi de replacer le moyen de protection de passager dans un état initial, **caractérisé en ce qu'**il est possible de surveiller que la valeur absolue de la vitesse de lacet (vGi) demeure en deçà d'une première valeur seuil prédéfinie.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10121386 C1
- WO 2004085220 A1